# EUROPEAN PATENT APPLICATION

(11) **EP 4 220 906 A1**
(43) Date of publication of application: **02.08.2023**
(21) Application number: 22153593.3
(22) Date of filing: 27.01.2022
(51) Int. Cl.: H02K 3/24, H02K 3/28, H02K 5/20, H02K 9/19, H02K 15/10

(54) **STATOR FOR AN ELECTRIC MACHINE, PRODUCTION METHOD FOR THE SAME AND MOTOR VEHICLE COMPONENT HAVING SUCH A STATOR**

(71) Applicant: MAHLE International GmbH, 70376 Stuttgart (DE)
(72) Inventor: Sever, Peter, 9000 Murska Sobota (SI)
(74) Representative: BRP Renaud & Partner mbB Rechtsanwälte Patentanwälte Steuerberater

(57) **Abstract**

The present invention relates to a stator (1) for an electric machine, having an annular stator body (3) defining a longitudinal centre axis (2), on whose outer circumference lateral surface (4) longitudinal ribs (5) projecting radially away to the outside and longitudinal cooling channels (6) that can be flowed through by cooling fluid that are delimited by the same are arranged, wherein the stator (1) comprises an annular outer housing sleeve (7) axially put over the stator body (3). It is substantial for the invention that the stator body (3) with the longitudinal ribs (5) is fixed to the outer housing sleeve (7) from radially inside in a frictionally locking manner. The invention additionally relates to a production method for such a stator (1) and to a motor vehicle component for a motor vehicle comprising a stator (1).

## Description

The invention relates to a stator for an electric machine according to the preamble of claim 1. Furthermore, the invention relates to a production method for a stator and to a motor vehicle component having a stator.

Generic stators are described, for example, in the documents DE 10 2017 221 808 A1 and US 2020 153 292 A1. Disadvantageous in these is that the stators have to be non-rotatably fastened with considerable design effort to an outer housing sleeve or an outer housing of the stator in order to be able to securely transmit a torque from the stator to the outer housing sleeve or the outer housing of the stator, as a result of which corresponding stators are relatively large structures and expensive.

The object of the invention therefore lies in stating an improved or at least another embodiment for a stator. Attempts are to be made in particular of stating a stator which can be produced comparatively economically and compactly. The invention has set itself the object at the same time of stating a production method for such a stator.

In the present invention, these objects are solved in particular through the subjects of the independent claims. Advantageous embodiments are subject of the dependent claims and the description.

The basic idea of the invention lies in non-rotably fixing a stator on an outer housing sleeve or an outer housing through frictional locking. Preferably, space between an overmolded stator body and an outer housing sleeve is used to provide plurality of longitudinal cooling channels for direct cooling utilization (i.e. water glycol mixture), and wherein said longitudinal cooling channels preferably comprises plurality of enhanced surfaces (i.e. ribs and or baffles for coolant disruption) manufactured and provided by overmolding material used for stator body encapsulation.

With this in mind, the invention proposes that a stator for an electric machine, in particular a liquid-cooled electric drive motor, comprises an annular stator body defining a longitudinal centre axis, on whose outer circumference lateral surface oriented with respect to the longitudinal centre axis radially to the outside, longitudinal ribs projecting radially to the outside and longitudinal cooling channels delimited by the same that can be flowed through by cooling fluid in particular in an axially meandering manner with respect to the longitudinal centre axis are arranged. Furthermore, the stator comprises an annular outer housing sleeve or an outer housing that is axially or co-axially put over the stator body. It is substantial that the stator body with the longitudinal ribs, from radially inside, is non-rotatably fixed to the outer housing sleeve in a frictionally locking manner. Because of this, torque can be transmitted without play and slip in a frictionally locked manner from the stator body to the outer housing sleeve or the outer housing. This has the advantage that additional torque transmission means can be omitted, as a result of which the stator according to the invention can be constructed to be relatively compact, yet also light in weight.

Preferably, the annular outer housing sleeve is locked to the stator body by friction. Further preferably, the outer housing is installed over the overmodled stator body by shrink fitting. Alternatively, the outer housing can be glued (i.e. hot melt adhesive) or locked in place by form-fit connection with the stator body and/or end plates.

Here, the outer housing sleeve or the outer housing can enclose the stator body in a circumferential direction about the longitudinal centre axis in sections or completely and axially with respect to the longitudinal axis at least in sections or completely. The outer housing sleeve can be part of the outer housing or form the same.

It is practical when the longitudinal ribs, radially preloaded, touchingly lie against the outer housing sleeve. Because of this, the torque transmitted from the stator body to the outer housing sleeve can be optimized or increased. This results from the fact that the maximum torque that is transmittable via the longitudinal ribs is practically proportional to the static friction on the contact surface between the longitudinal ribs particularly comprising baffles and the outer housing sleeve and the radial preload.

It is practical, furthermore, when the longitudinal ribs each comprise a rib front face oriented radially to the outside that is flat or curved round about the longitudinal centre axis, via which the stator body touchingly supports itself areally on an outer housing sleeve inner circumference lateral surface of the outer housing sleeve. Furthermore, the longitudinal ribs can each practically comprise two rib flanks extending in the direction of the longitudinal centre axis, which in a circumferential direction round about the longitudinal centre axis are oriented opposite to one another and are preferably aligned parallel or skewed to one another. The rib flanks of a longitudinal rib can be connected to one another via a said rib front face of this longitudinal rib. The rib front faces can thereby define an aggregated total area via which the torque can be transmitted from the stator body to the outer housing sleeve. When the longitudinal ribs extend over an entire longitudinal length of the stator body, an optimal width of the rib front faces in circumferential direction can be determined, for example, empirically through tests, wherein the relationship that with relatively large aggregated total area, i.e. relatively large-area rib front faces and torque remaining the same a lesser surface pressure on the longitudinal ribs is achievable, or vice versa, can apply. It is obvious that the maximum transmittable torque is practically limited merely by the static friction between the longitudinal ribs or their rib front faces and the radial preload, but not by the rib front faces or the aggregated total area of the outer housing sleeve inner circumference lateral surface of the outer housing sleeve, or a contact area formed between the rib front faces and the outer housing sleeve inner circumference lateral surface.

Practically, the longitudinal ribs can be arranged on the stator body spaced apart from one another in a circumferential direction round about the longitudinal centre axis, wherein in each case between two longitudinal ribs directly adjacent to one another in the circumferential direction a longitudinal cooling channel is delimited. By way of this, a favourable embodiment for a stator is stated, in which the longitudinal ribs practically extend cage wheel-like longitudinally over an entire longitudinal length of the outer circumference lateral surface of the stator body.

Practically, there are further embodiments for such a stator. For example, a stator comprising pinfin structures and/or longitudinal ribs and/or transverse ribs etc. Preferably, a stator comprising pinfin structures and/or longitudinal ribs and/or transverse ribs is formed by usage of overmolding process to form the enhanced surface. The key is, that these longitudinal ribs, which are preferred to be used to disturb the coolant flow for increased thermal performance are manufactured by overmolding process. Preferably, the said longitudinal ribs forming a meander like structure, whereby the pressure drop is just slightly increased (since all channels on outer side of stator stack are in parallel connection), where thermal performance of stator stack cooling is increased for more than 20%.

Preferably, the said longitudinal ribs and/or cooling fluid guide projections are formed by baffles.

Once again, preferably these baffles, particularly the said longitudinal ribs and/or cooling fluid guide projections, are primarily used to disturb the coolant flow for increased thermal performance are manufactured by overmolding process.

Furthermore, the longitudinal ribs can be arranged on the stator body spaced apart from one another round about the longitudinal centre axis in a circumferential direction so that their number corresponds to a number of stator teeth arranged on a radial inner circumference lateral surface of the stator body for supporting stator windings of the stator. Obviously, more or fewer lateral ribs than the stator body has stator teeth can also be provided.

Preferably, the number and/or shape of the longitudinal cooling channels on the outer side of the stator body is just the choice of design. In another embodiments the longitudinal cooling channels could be implemented in a circumferential direction, since longitudinal cooling channels and longitudinal ribs or baffle structures are manufactured by overmolding, thus providing huge freedom to design also much more complex shape of the channels.

Preferably, the longitudinal cooling channels are essentially provided by a stator body overmolding process.

Further practically, the longitudinal ribs and the stator body can form a monolithic component. In other words, the longitudinal ribs and the stator body are an integral embodiment. Because of this, the production of the stator can take place relatively cost-effectively. Practically, the stator body, in particular the outer circumference lateral surface of the same, can be over-moulded with a plastic material, so that the longitudinal ribs and the longitudinal cooling channels are at least in sections or completely covered with a plastic material cover. Practically, the plastic material cover can be at least some thousandths of a millimetre or some hundredths of a millimetre or some tenths of a millimetre thick and/or be sprayed onto the entire stator body with even thickness. Preferably, the minimum thickness of the moulded plastic material cover is 0.15 mm, in particular due to the size of the filler. For practical reasons, the nominal thickness in all areas where no insulation breakthrough is required can be 0.2 mm. The over-moulding can be realised, for example, by plastic injection moulding, if transfer molding is used. It is conceivable, furthermore, that the plastic material cover shows at least local thickness deviations. In particular, it can be provided that a thickness of the plastic material cover is smaller radially above the rib front faces of the longitudinal ribs than the thickness of the plastic material cover radially above a cooling channel bottom of a longitudinal cooling channel. Through a suitable over-moulding with plastic material, the stator body can be sealed, for example, relative to the cooling fluid with aim to provide a corrosion resistant coating.

For sake of cooling with water glycol, one of the objectives is to ensure corrosion protection, the complete stator body can be coated at least with thin skin of plastic material.

Preferably, the longitudinal cooling channels and/or the longitudinal ribs forming baffled structures.

Practically, furthermore, when the longitudinal ribs extend axially, with respect to the longitudinal centre axis, completely over the stator body. A rib longitudinal length of a longitudinal rib can thus correspond to an axial longitudinal length of the stator body. In other words, in practice the axial length of the longitudinal ribs and/or the length of the longitudinal cooling channels is at least the same as the length of the stator stack. Alternatively, however, it can be provided that the longitudinal ribs extend axially with respect to the longitudinal centre axis over maximally 50 % of the stator body or over minimally 50 % and up to maximally 90 % of the stator body. A rib longitudinal length of a longitudinal rib in these cases can therefore correspond maximally to 50 % or minimally 50 % and maximally 90 % of an axial longitudinal length of the stator body. Alternatively, the longitudinal ribs can axially extend merely 70 % to 95 % over a longitudinal length of the stator body. Because of this, the longitudinal ribs have, axially with respect to the longitudinal centre axis, either the same length as the stator body or they are configured axially slightly shorter with respect to the longitudinal centre axis. Because of this, installation space for cooling supply installations, for example, cooling supply lines or a coolant deflection chamber can be created on the stator or stator body axially in front of and/or behind the longitudinal ribs.

Further, due to the fact, that the insulation material, for instance the said plastic material, is also applied on the front and rear surface of the stator body, the axial length of the longitudinal cooling channels is actually bigger than a stator body length, e.g. length of the stator body plus 2 x 0,2mm. Further the length of the longitudinal cooling channels can be essentially bigger than a stator body length of the stator body.

The longitudinal ribs can have a rib cross-section that is oriented transversely with respect to the longitudinal centre axis, which is configured substantially rectangular in shape. Practically, the rib cross-section of the longitudinal ribs is constant in each longitudinal position in the direction of the longitudinal centre axis.

The longitudinal cooling channels can have a channel cross-section that is oriented transversely with respect to the longitudinal centre axis, which is substantially configured rectangular in shape. Practically, the channel cross-section of the longitudinal ribs is constant in each longitudinal position in the direction of the longitudinal centre axis.

Practically, the channel cross-sections of the longitudinal cooling channels can be configured larger based on the rib cross-sections of the longitudinal ribs.

It can also be provided that the stator body comprises cooling fluid guide projections, which are arranged in the longitudinal cooling channels where they interact with the cooling fluid flowing through in a flow-conducting manner. Because of this, a cooling fluid flow of cooling fluid flowing through the longitudinal cooling channels can be specifically influenced with respect to flow. For example, it can thereby be achieved that the cooling fluid flows, axially meandering with respect to the longitudinal centre axis, through the longitudinal cooling channels. Because of this, the cooling fluid guide projections can interact with the cooling fluid flowing through, or generate a vortices or a turbulent flow, as a result of which the cooling effect can be advantageously improved.

Furthermore, it can be provided that the cooling fluid guide projections are each arranged in a longitudinal cooling channel angularly, for example at a 45° angle, or right-angled with respect to a longitudinal rib and/or the longitudinal centre axis and/or a longitudinal cooling channel. By way of this, a cooling fluid flow of cooling fluid can also be specifically influenced with respect to flow in order to improve, for example, a heat discharge by the cooling fluid.

Furthermore, the cooling fluid guide projections can each be arranged on the longitudinal ribs and, emanating from these, project into the longitudinal cooling channels. The cooling fluid guide projections are practically moulded onto the longitudinal ribs, for example, when they are separate components with respect to the longitudinal ribs, and/or formed integrally with these and further extend from these longitudinal ribs into a longitudinal cooling channel adjoining the respective longitudinal rib. Here, a cooling fluid guide projection can extend on the foot side over a cooling channel bottom of a longitudinal cooling channel and, if applicable, be moulded onto the same and/or be integrally embodied with the same. By way of this, a heat discharge through the cooling fluid can also be improved.

It is practical when the cooling fluid guide projections on the cooling channel bottom of a respective longitudinal cooling channel are embodied wider than on the sides of the cooling fluid guide projections facing away from the cooling channel bottom. Each cooling fluid guide projection can have, for example, a relatively wide cooling fluid guide projection foot arranged on the cooling channel bottom and a relatively narrow cooling fluid guide projection head facing away from the cooling channel bottom, wherein a conical form profile between cooling fluid guide projection foot and cooling fluid guide projection head of the cooling fluid guide projection is preferred. The said cooling fluid guide projections can be tilted or inclined, preferably tilted or inclined with respect to the said longitudinal centre axis and/or with respect to the outer circumference lateral surface of the stator body.

Furthermore, the cooling fluid guide projections can be formed or realised entirely from plastic material. Alternatively or additionally, the cooling fluid guide projections can be produced as part of the over-moulding of the stator body, in particular of the outer circumference lateral surface of the same, with a plastic material jointly with the plastic material cover, so that the cooling fluid guide projections and the plastic material cover form an integral unit. Accordingly, the cooling fluid guide projections are produced completely from plastic and can be preferably embodied integrally with the said plastic material cover. Here it can be practically opportune to form the said plastic material cover and the cooling fluid guide projections as part of a plastic injection moulding in a single, common process step. Obviously, the plastic material cover and the cooling fluid guide projections can also be produced in different process steps as part of the plastic injection moulding, so that for example for the plastic material cover a plastic material can be employed that is distinct from that for the cooling fluid guide projections. Because of this, the production of the cooling fluid guide projections can take place relatively cost-effectively, for example, through plastic injection moulding.

Practically, the cooling fluid guide projections can have a cooling fluid guide projection length in their respective main extension direction which amounts to at least 10 % of a cooling channel width of a longitudinal cooling channel measured in particular in a circumferential direction round about the longitudinal centre axis. Alternatively, the cooling fluid guide projections can have a cooling fluid guide projection length which amounts to maximally 90 % of a cooling channel width of a longitudinal cooling channel measured in particular in a circumferential direction round about the longitudinal centre axis. The cooling fluid guide projection length of a cooling fluid guide projection can, furthermore, amount to between at least 10 % and maximally 90 % of a cooling channel width of a longitudinal cooling channel measured in particular in a circumferential direction round about the longitudinal axis. The cooling channel width of a longitudinal cooling channel can be the width of a longitudinal cooling channel standing perpendicular with respect to a longitudinal rib and/or with respect to the longitudinal centre axis that can be flowed through. By way of this, the length of the cooling fluid guide projections can be quasi pre-set and thus the cooling fluid flow of cooling fluid specifically influenced in terms of flow.

Practically, the cooling fluid guide projection lengths of all cooling fluid guide projections can be embodied identically.

Practically, furthermore, when the cooling fluid guide projections have a cooling fluid guide projection width oriented perpendicularly with respect to the cooling fluid guide projection length that amounts to at least 10 % of the cooling fluid guide projection length. Alternatively, the cooling fluid guide projections can have a cooling fluid guide projection width that is oriented perpendicularly with respect to the cooling fluid guide projection length which amounts to maximally 90 % of the cooling fluid guide projection length. The cooling fluid guide projection width of a cooling fluid guide projection can, furthermore, amount to between at least 10 % and maximally 90 % of the cooling fluid guide projection length of this cooling fluid guide projection. By way of this, preferred widths for the cooling fluid guide projections are stated.

Practically, the cooling fluid guide projection widths of all cooling fluid guide projections can be embodied identically.

On the longitudinal ribs of the stator body, cooling fluid guide projections can be arranged in each case, practically at least one single cooling fluid guide projection each on a longitudinal rib. The cooling fluid guide projections practically project, emanating from a respective longitudinal rib on which they are arranged, into a longitudinal cooling channel directly adjacent to this longitudinal rib. In other words, each longitudinal rib of these longitudinal ribs are assigned cooling fluid guide projections, wherein the cooling fluid guide projections of each longitudinal rib project into a longitudinal cooling channel.

Practically, it can be provided, furthermore, that the cooling fluid guide projections, emanating from a respective longitudinal rib, on which they are arranged, project into a longitudinal cooling channel that is adjacent to the respective longitudinal rib in the manner that each longitudinal cooling channel is assigned at least one cooling fluid guide projection. Because of this, each longitudinal cooling channel comprises at least one cooling fluid guide projection, so that the cooling fluid flow of cooling fluid flowing through the longitudinal cooling channels can be optimally influenced.

Furthermore, it can be additionally or alternatively provided that on the longitudinal ribs multiple cooling fluid guide projections each are arranged, wherein the cooling fluid guide projections are arranged on a respective longitudinal rib axially spaced apart longitudinally from one another with respect to the longitudinal centre axis. Here it is practical when the multiple cooling fluid guide projections of a respective longitudinal rib axially project alternatingly with respect to the longitudinal centre axis, i.e. axially alternatingly, in a circumferential direction round about the longitudinal centre axis into a longitudinal cooling channel that is adjacent to the respective longitudinal rib in the circumferential direction and in a counter-circumferential direction that is opposite with respect to the circumferential direction into a further longitudinal cooling channel that is adjacent in the counter-circumferential direction to the respective longitudinal rib.

Furthermore, it can be additionally or alternatively provided that the cooling fluid guide projections projecting into longitudinal cooling channels in circumferential direction each lie in first planes and the cooling fluid guide projections projecting into further longitudinal cooling channels in a counter-circumferential direction each lie in second planes, wherein the first planes and second planes are arranged axially with respect to the longitudinal centre axis in alternating order and are axially spaced apart from one another with respect to the longitudinal centre axis, wherein a first plane of these first planes is assigned those cooling fluid guide projections projecting into longitudinal cooling channels in the circumferential direction, which in the circumferential direction are directly adjacent to one another, wherein a second plane of these second planes is assigned those cooling fluid guide projections projecting into longitudinal cooling channels in counter-circumferential direction, which in the counter-circumferential direction are directly adjacent to one another. Because of this, a shape of the stator practically materialises, in which the cooling fluid guide projections are each arranged on planes standing perpendicularly on the longitudinal centre axis. Because of this, a preferred shape of the cooling fluid guide projections is described, through which a cooling fluid flow of cooling fluid through the stator can be optimally influenced in terms of flow.

In order to optimise the cooling on the stator it can be provided that on the stator body, radially inside with respect to the longitudinal centre axis, electrically conductive stator windings that are covered radially inside by a plastic injection moulding body of plastic material are fixed, which on both sides, with respect to the longitudinal centre axis, axially protrude over the stator body so that the same is axially flanked on both sides by annular axial protrusions. Furthermore, the stator can comprise radial cooling clearances that can be flowed through by coolant, which completely penetrate the one and/or other said axial protrusion, wherein the radial cooling clearances practically penetrate the one and/or other axial protrusion with respect to the longitudinal centre axis radially or in the direction of a vertical axis standing perpendicularly on the longitudinal centre axis.

The invention can include the alternative or additional further basic idea of stating a production method for a stator or a stator body for a stator according to the preceding description. As part of the production method for a stator or for a stator body, the following steps are provided:
1) providing a stator body;
2) spraying or applying or coating or transfer molding or overmolding on a plastic insulating material or a corrosion resistant material onto the outer circumference lateral surface of the stator body, so that at least a portion of the stator body, optional the whole stator body, is encapsulated and so that longitudinal ribs forming longitudinal cooling channels therebetween and/or cooling fluid guide projections are realised.

By way of this, radial cooling clearances and the plastic material cover with cooling fluid guide projections can be produced in a single process step as part of a plastic injection moulding, as a result of which the cycle times during the plastic injection moulding are reduced and therefore the stator altogether can be produced relatively quickly and cost-effectively.

Another basic idea of the invention that is realisable additionally or alternatively to the basic ideas mentioned further up can lie in stating a motor vehicle component, in particular a liquid-cooled electric drive motor. The same can comprise a rotor which interacts with a stator according to the above description optionally produced according to the production method described above, in order to provide a drive moment on the output side. Such a motor vehicle component can be preferably used in motor vehicles in order to drive the same.

Preferably, the stator body according to a preferred embodiment comprises plurality of enhanced (or raised) surfaces for coolant flow utilization, realised in particular through longitudinal ribs and/or cooling fluid guide projections, manufactured and provided by stator overmolding process.

Further preferably, in another preferred embodiment, the said longitudinal cooling channels are fluidically connecting a first and a second side of the stator body, particular a first front end of the stator body and a second side of the stator body.

In another preferred embodiment, the overmolded structure, realised in particular through longitudinal ribs and/or cooling fluid guide projections, may limit the coolant flow only to the outer circumference lateral surface of the stator body particularly with aim to provide a closed chamber, e.g. for cooling an electric motor, through which preferentially cooling fluid flows annularly and/or whose fluid supply connections preferentially are arranged on the same side of the stator body.

In summary it remains to note: The present invention preferentially relates to a stator for an electric machine, having a stator body defining a longitudinal centre axis, on whose outer circumference lateral surface longitudinal ribs and, delimited by the same, longitudinal cooling channels that can be flowed through by cooling fluid are arranged, wherein the stator comprises an outer housing sleeve put over the stator body. The stator body is practically fixed with the longitudinal ribs from radially inside to the outer housing sleeve in a frictionally locked manner. The invention can additionally relate to a production method for such a stator and to a motor vehicle component for a motor vehicle comprising such a stator.

Further important features and advantages of the invention are obtained from the subclaims, from the drawings and from the associated figure description by way of the drawings.

It is to be understood that the features mentioned above and still to be explained in the following cannot only be used in the respective combination stated but also in other combinations or by themselves without leaving the scope of the present invention.

Preferred exemplary embodiments of the invention are shown in the drawings and are explained in more detail in the following description, wherein same reference numbers relate to same or similar or functionally same components.

It shows, in each case schematically.
- Fig. 1: a perspective view of a preferred exemplary embodiment of a stator according to the invention, wherein an outer housing sleeve of the stator is hidden in favour of the noticeability of a stator body of the stator,
- Fig. 2: a perspective view of a preferred further exemplary embodiment of a stator according to the invention, whose outer housing sleeve is now shown, wherein the stator is purely exemplarily cut longitudinally,
- Fig. 3: a sectional view of the stator according to the invention from Fig. 2, and finally
- Fig. 4: a side view of a further preferred exemplary embodiment of a stator according to the invention, wherein an outer housing sleeve of the stator is hidden in favour of the noticeability of a stator body of the stator.

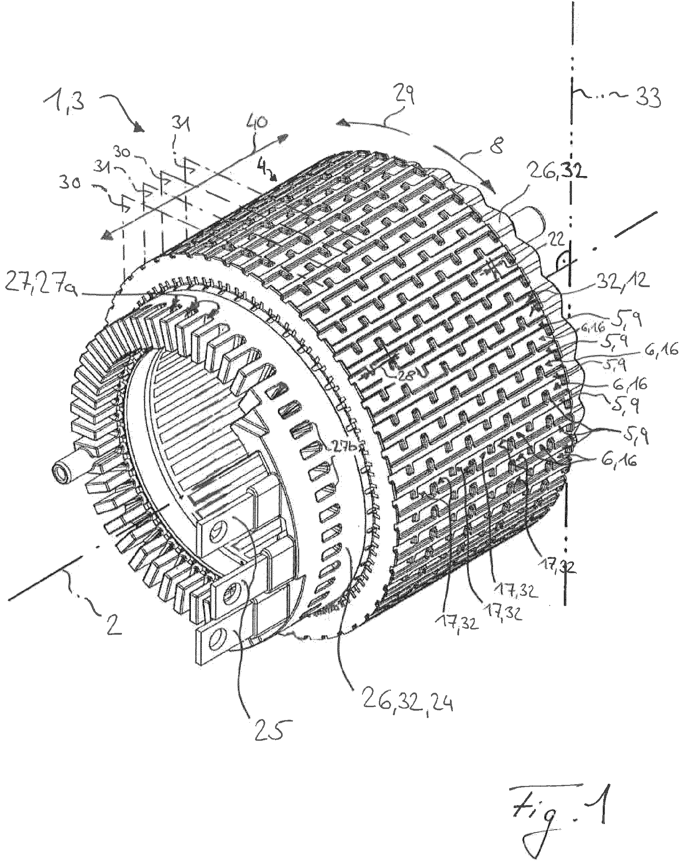

Figs. 1 to 4 showing preferred exemplary embodiments of a stator defined in its entirety with the reference number 1, which can be integrated in an electric machine, in particular a liquid-cooled electric drive motor and there interact during the operation of the electric machine with a rotor that is not illustrated.

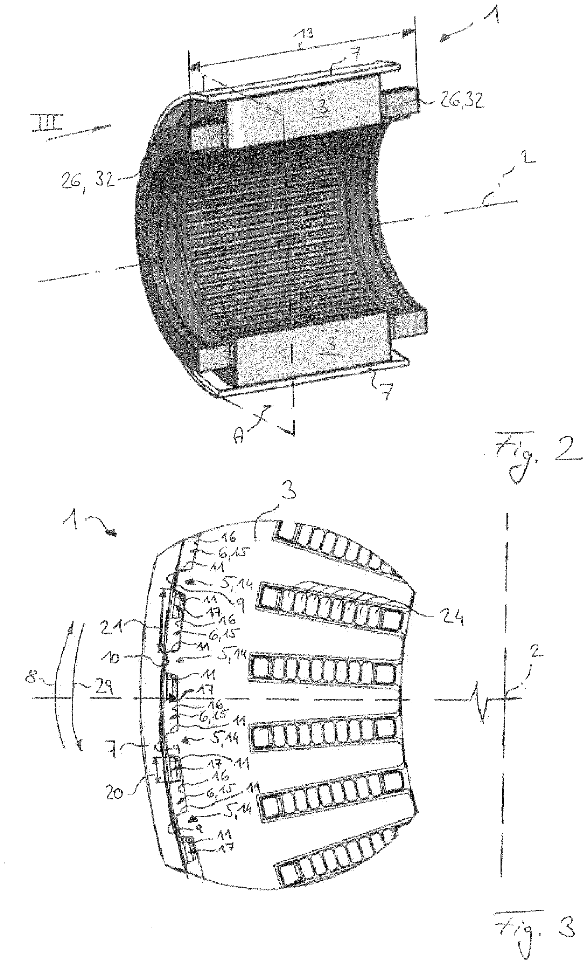

As mentioned, Fig. 1 shows a preferred exemplary embodiment of a stator 1, which comprises an annular stator body 3 defining a longitudinal centre axis 2 in its main extension direction 40 which can, for example, consist of separate individual stator plates touchingly stacked onto one another (not illustrated). A vertical axis 33 stands perpendicularly on the longitudinal centre axis 2 while a circumferential direction 8 marked with a corresponding arrow in Figs. 1 and 3 rotates around the longitudinal centre axis 2 and a counter-circumferential direction 29 oriented in the opposite direction in this regard, which is likewise marked with a corresponding arrow in Figs. 1 and 3.

Radially inside with respect to the longitudinal centre axis 2, quasi in the direction of the vertical axis 33, the stator body 3 has an inner circumference lateral surface which is not referred to in more detail, on which electrically conductive stator windings 24 that are completely covered by a plastic injection moulding body 32 of plastic material, which was realised, for example, as part of a plastic injection moulding, and phase supply connections 25 which are at least covered in sections are fixed. These covered stator windings 24 axially protrude on both sides with respect to the longitudinal centre axis 2 over the stator body 3, which here are referred to as axial protrusions 26. On one of the two axial protrusions 26, radial cooling clearances 27 that can be flowed through by coolant are arranged, which radially and completely penetrate this axial protrusion 26. By way of the radial cooling clearances 27, which evidently are realised on one side as cooling slots 27a and on the other hand as cooling tunnel 27b, coolant can radially flow through the axial protrusion 26 so that the same, for example, during the operation of the electric machine, can be cooled.

Furthermore, the stator body 3 has an outer circumference lateral surface 4 radially outside, on which a multiplicity of longitudinal ribs 5 formed monolithically with the stator body 3 and projecting away from the stator body 3 radially to the outside are arranged, which are spaced apart from one another in the circumferential direction 8. Here, the longitudinal ribs 5 extend in each case axially with respect to the longitudinal centre axis 2 completely over a longitudinal length 13 of the stator body 3. In addition to this, it is also noticeable in Fig. 1 that the longitudinal ribs 5 each comprise a rib front face 9 embodied slightly curved round about the longitudinal centre axis 2 that is oriented radially to the outside. Practically, besides the rib front face 9 oriented radially to the outside the longitudinal ribs 5 each have additionally two rib flanks 11 extending axially with respect to the longitudinal centre axis 2 which in the circumferential direction 8 are oriented opposite and preferably parallel or skewed to one another. The rib flanks 11 of a longitudinal rib 5 can adjoin a said rib front face 9 towards both sides so that they are quasi contiguous with the same. Each of the longitudinal ribs 5 have a cross section 14 oriented transversely with respect to the longitudinal centre axis 2, which, as is noticeable in Fig. 3, are substantially configured rectangular in shape or trapezium-shaped.

The stator body 3, furthermore, comprises a multiplicity of longitudinal cooling channels 6 which are flowed through by cooling fluid for cooling the stator 1 during the operation of the electric machine. The longitudinal cooling channels 6 are each delimited or formed between two longitudinal ribs 5 that are directly adjacent to one another in the circumferential direction 8 and exemplarily extend axially over the stator body 3. Practically they have the same length in the direction of the longitudinal centre axis 2 as the longitudinal ribs 5. Each longitudinal cooling channel 6 has a cooling channel bottom 16 that is embodied slightly curved round about the longitudinal centre axis 2, each of which with respect to the rib front faces 9 of the longitudinal ribs 5 recede radially. The stator body 3 is exemplary over-moulded with a plastic material so that the longitudinal ribs 5 and the longitudinal cooling channels 6 are completely covered with a relatively thin plastic material cover 12. The plastic material cover 12 is exemplarily an integral, contiguous part of the said plastic injection moulding body 32, which was realised, for example, as part of a plastic injection moulding. The longitudinal cooling channels 6 each have exemplary a clear, i.e. flushable, free channel cross-section 15 oriented transversely with respect to the longitudinal centre axis 2, which are formed substantially rectangular in shape or trapezium-shaped. Practically, the channel cross-sections 15 of the longitudinal cooling channels 6 are, in terms of area, at least twice or three times as large as the said rib cross-sections 14 of the longitudinal ribs 5.

For example, in the mounted state of the electric machine, the stator body 3 is axially inserted or pressed into an exemplary annular outer housing sleeve 7, see Figs. 2 and 3, so that the outer housing sleeve 7 completely frames the stator body 3 in the circumferential direction 8, while it encloses the stator body 3 axially with respect to the longitudinal centre axis 2 merely in sections, since purely exemplarily at least the said axial protrusions 26 also protrude over the outer housing sleeve 7. Furthermore, the stator body 3 is inserted or pressed into the outer housing sleeve 7 so that the stator body 3 with the longitudinal ribs 5 is fixed from radially inside to the outer housing sleeve 7 in a frictionally locking manner, so that the stator body 3 is non-rotatable relative to the outer housing sleeve 7. Here, the longitudinal ribs 5 are each radially preloaded and lie in each case, with their rib front faces 9 embodied slightly curved round about the longitudinal centre axis 2 and oriented radially to the outside, touchingly against an outer housing sleeve inner circumference lateral surface 10 of the outer housing sleeve 7 looking radially to the inside towards the longitudinal centre axis 2, see Figs. 2 and 3. By way of this it can be achieved altogether that torque can be transmitted free of play and free of slippage in a frictionally locking manner from the stator body 3 to the outer housing sleeve 7. Additional torque transmission means can therefore be omitted.

In Figs. 1 and 3 it is noticeable that the stator body 3 on each longitudinal rib 5 comprises a multiplicity of cooling fluid guide projections 17, which are each arranged in the described longitudinal cooling channels 6 where they interact with the cooling fluid flowing through in a flow conducting manner. Here, the cooling fluid projections 17 are each exemplarily arranged at a right angle with respect to a longitudinal rib 5 and likewise at a right angle with respect to the longitudinal centre axis 2 in a respective longitudinal cooling channel 6. Here, the cooling fluid guide projections 17, which are exemplarily realised from plastic material as integral part of the said plastic injection moulding body 32 and together with the over-moulding of the stator windings 24, the phase supply connections 25 and the plastic material cover 12 are produced in a process step of a plastic injection moulding, define a cooling fluid guide projection length 20, in their respective main extension direction, see Fig. 3, wherein the cooling fluid guide projection length 20 of all cooling fluid guide projections 17 is identical and each amounts to approximately 75 % of a cooling channel width 21 of a longitudinal cooling channel 6 to be defined in the circumferential direction 8. The cooling fluid guide projections 17, furthermore, each have a cooling fluid guide projection width 22 oriented perpendicularly with respect to their cooling fluid guide projection length 20, see Fig. 1, wherein here the same are all identical and amounts to approximately 25 % of the cooling fluid guide projection length 20 of the cooling fluid guide projections 17. The cooling fluid guide projections 17 are each arranged on the longitudinal ribs 5, see Fig. 1, so that they, emanating from a respective longitudinal rib 5, on which they are arranged, project into a longitudinal cooling channel 6 that is adjacent to the respective longitudinal rib 5. Because of this, each longitudinal cooling channel 6 is assigned a multiplicity of cooling fluid guide projections 17. Furthermore, the cooling fluid guide projections 17 of a respective longitudinal rib 5 are arranged axially with respect to the longitudinal centre axis 2 with longitudinal distance 28 from one another on a respective longitudinal rib 5. In Fig. 1 it is noticeable, furthermore, that the cooling fluid guide projections 17 of a respective longitudinal rib 5 axially project with respect to the longitudinal centre axis 2 alternatingly in the circumferential direction 8 into a cooling channel 6 that is adjacent in the circumferential direction 8 to the respective longitudinal rib 5 and in the counter-circumferential direction 29 into a further longitudinal cooling channel 6 that is adjacent in the counter-circumferential direction 29 to the respective longitudinal rib 5, wherein the cooling fluid projections 17 projecting into longitudinal cooling channels 6 in the circumferential direction 8 each lie in first planes 30, which are indicated in Fig. 1 only in the form of extracts and with dashed lines and the cooling fluid projections 17 projecting in the counter-circumferential direction 29 into further longitudinal cooling channels 6 each lie in second planes 31, which in Fig. 1 are only indicated in the form of extracts and with dash-dotted lines. Here, the first planes 30 and the second planes 31 are evidently arranged axially with respect to the longitudinal centre axis 2 in alternating order, axially spaced apart from one another with respect to the longitudinal centre axis 2 and each oriented orthogonally with respect to the longitudinal centre axis 2. In Fig. 1 it is also noticeable that a first plane 30 of these first planes 30 is assigned those cooling fluid guide projections 17 projecting into longitudinal cooling channels 6 in the circumferential direction 8 which are directly adjacent to one another in the circumferential direction 8. Likewise, a second plane 31 of these second planes 31 each is assigned those cooling fluid guide projections 17 projecting into longitudinal cooling channels 6 in the counter-circumferential direction 29, which in the circumferential direction 8 or counter-circumferential direction 29 are directly adjacent to one another.

In Fig. 3, a sectional view of the stator according to the invention from Fig. 2 is shown, wherein the stator 1 according to a plane A indicated in dashed line in Fig. 2 has been cut, so that a stator interface of the stator is noticeable looking in the direction of an arrow III likewise entered in Fig. 2. Here it is in particular noticeable that the rib front faces 9 of the longitudinal ribs 5 radially lie touchingly against the outer housing sleeve inner circumference lateral surface 10, wherein the longitudinal ribs 5 are practically preloaded radially so that torque is transmittable from the stator body 3, whose stator windings 24 are noticeable in the cross-section, to the outer housing sleeve 7 in a frictionally locking manner.

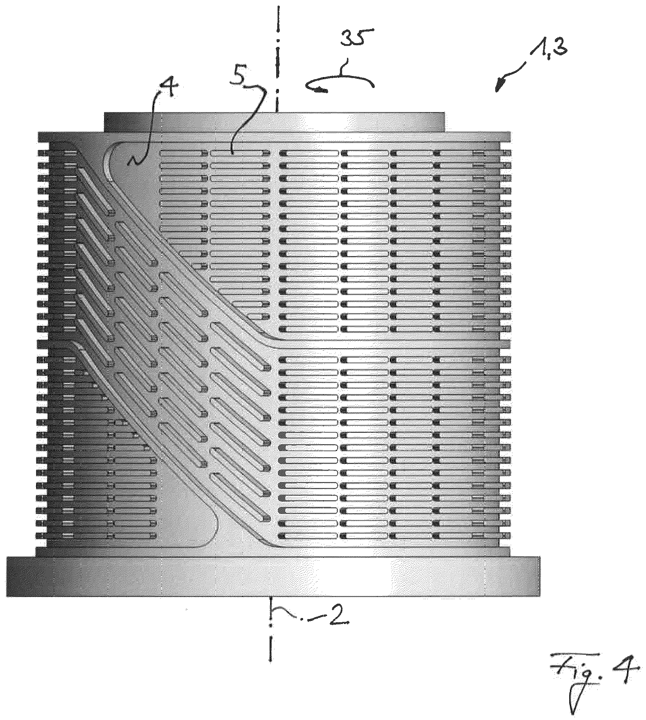

Finally, Fig. 4 showing a side view of a further preferred exemplary embodiment of a stator 1, wherein an outer housing sleeve of the stator 1 is hidden to show a stator body 3 of the stator 1. The stator body 3 comprising an outer circumference lateral surface 4 with ribs 5 and/or cooling fluid guide projections 17 placed thereon. The said ribs 5 and/or cooling fluid guide projections 17 extending substantially in a circumferential direction 35 around the stator body 3 and/or inclined with respect to a longitudinal centre axis 2 of the stator body 3. Thus, the stator 1 comprises plurality of enhanced (or raised) surfaces, realised in particular through ribs 5 and/or cooling fluid guide projections 17, for coolant flow utilization, manufactured and provided by a stator overmolding process.

## Claims

1. A stator (1) for an electric machine, in particular a liquid-cooled electric drive motor,
- having an annular stator body (3) defining a longitudinal centre axis (2), whose outer circumference lateral surface (4) comprises longitudinal ribs (5) projecting away radially to the outside and longitudinal cooling channels (6) delimited by the same which can be flowed through by cooling fluid, and an annular outer housing sleeve (7) axially put over the stator body (3),
**characterised in that**,
- the stator body (3) with the longitudinal ribs (5) is non-rotatably fixed to the outer housing sleeve (7) from radially inside in a frictionally locking manner.

2. The stator (1) according to Claim 1,
**characterised in that**,
the longitudinal ribs (5), radially preloaded, touchingly lie against the outer housing sleeve (7).

3. The stator (1) according to Claim 1 or 2,
**characterised in that**,
the longitudinal ribs (5) each have a rib front face (9) that is oriented radially to the outside or slightly curved round about the longitudinal centre axis (2), via which the stator body (3) is supported on an outer housing sleeve inner circumference lateral surface (10) of the outer housing sleeve (7).

4. The stator (1) according to any one of the preceding claims,
**characterised in that**,
- the longitudinal ribs (5) are arranged on the stator body (3) in a circumferential direction (8) round about the longitudinal centre axis (2) spaced apart from one another,
- wherein between two longitudinal ribs (5) directly adjacent to one another in the circumferential direction (8) a longitudinal cooling channel (6) each is delimited.

5. The stator (1) according to any one of the preceding claims,
**characterised in that**,
the longitudinal ribs (5) and the stator body (3) form a monolithic component.

6. The stator (1) according to any one of the preceding claims,
**characterised in that**,
the stator body (3) is over-moulded with a plastic material, so that the longitudinal ribs (5) and/or the longitudinal cooling channels (6) are realised and/or covered with a plastic material cover (12) at least in sections or completely.

7. The stator (1) according to any one of the preceding claims,
**characterised in that**,
- the longitudinal ribs (5) extend axially with respect to the longitudinal centre axis (2) completely over the stator body (3), or
- the longitudinal ribs (5) extend axially with respect to the longitudinal centre axis (2) over maximally 50 % of the stator body (3), or
- the longitudinal ribs (5) extend axially with respect to the longitudinal centre axis (2) over minimally 50 % and up to maximally 90 % of the stator body (3).

8. The stator (1) according to any one of the preceding claims,
**characterised in that**,
the stator body (3) comprises cooling fluid guide projections (17) which are arranged in the longitudinal cooling channels (6) where they interact with the cooling fluid flowing through in a flow-conducting manner.

9. The stator (1) according to Claim 8,
**characterised in that**,
the cooling fluid guide projections (17) are each arranged in a longitudinal cooling channel (6) angularly or at a right angle with respect to a longitudinal rib (5) and/or the longitudinal centre axis (2).

10. The stator (1) according to any one of the preceding Claims,
**characterised in that**,
- the longitudinal ribs (5) and/or the cooling fluid guide projections (17) are completely realised from plastic material, and/or
- the longitudinal ribs (5) and/or the cooling fluid guide projections (17) are produced as part of the over-moulding of the stator body (3) with a plastic material jointly with the plastic material cover (12), so that the longitudinal ribs (5) and/or the cooling fluid guide projections (17) and the plastic material cover (12) form a contiguous, integral unit.

11. The stator (1) according to any one of the Claims 8 to 10,
**characterised in that**,
- the cooling fluid guide projections (17) in their respective main extension direction have a cooling guide projection length (20), wherein the cooling fluid guide projection length (20) of at least one cooling fluid guide projection (17) amounts to at least 10 % and/or maximally 90 % of a cooling channel width (21) of a cooling channel (6) and/or
- the cooling fluid guide projections (17) have a cooling fluid guide projection width (22) oriented perpendicularly with respect to their cooling fluid guide projection length (20), wherein the cooling fluid guide projection width (22) of at least one cooling fluid guide projection (17) amounts to at least 10 % and/or maximally 90 % of the cooling fluid guide projection length (20) of this cooling fluid guide projection (17).

12. The stator (1) according to any one of the Claims 8 to 11,
**characterised in that**,
- on the longitudinal ribs (5) at least one cooling fluid guide projection (17) each is arranged, and/or
- the cooling fluid guide projections (17), emanating from a respective longitudinal rib (5), on which they are arranged, project into a longitudinal cooling channel (6) that is adjacent to the respective longitudinal rib (5) in the manner that each longitudinal cooling channel (6) is assigned at least one cooling fluid guide projection (17), and/or
- on the longitudinal ribs (5) multiple cooling fluid guide projections (17) each are arranged, wherein the cooling fluid guide projections (17) are arranged on a respective longitudinal rib (5) axially relative to the longitudinal centre axis (2) with longitudinal distance (28) from one another, and/or
- the multiple cooling fluid guide projections (17) of a respective longitudinal rib (5) axially project, with respect to the longitudinal centre axis (2), alternatingly in a circumferential direction (8) round about the longitudinal centre axis (2) into a longitudinal cooling channel (6) that is adjacent in the circumferential direction (8) to the respective longitudinal rib (5) and into a further longitudinal cooling channel (6) in a counter-circumferential direction (29) that is oriented opposite with respect to the circumferential direction (8) and adjacent to the respective longitudinal rib (5) in the counter-circumferential direction (29), and/or
- the cooling fluid guide projections (17) projecting into longitudinal cooling channels (6) in the circumferential direction (8) each lie in first planes (30) and the cooling fluid guide projections (17) projecting into further longitudinal cooling channels (6) in the counter-circumferential direction (29) each lie in second planes (31), wherein the first planes (30) and second planes (31) are arranged axially with respect to the longitudinal centre axis (2) in alternating order and are spaced apart from one another axially with respect to the longitudinal centre axis (2), wherein a first plane (30) of these first planes (30) are assigned those cooling fluid guide projections (17) projecting into the longitudinal cooling channels (6) in the circumferential direction (8), which in the circumferential direction (8) are directly adjacent to one another, wherein a second plane (31) of these second planes (31) are assigned those cooling fluid guide projections (17) projecting into longitudinal cooling channels (6) in the counter-circumferential direction (29), which are directly adjacent to one another in the counter-circumferential direction (29).

13. The stator (1) according to any one of the preceding claims,
**characterised in that**,
- on the stator body (3), with respect to the longitudinal centre axis (2), electrically conductive stator windings (24) that are covered by a plastic injection moulding (32) radially inside are fixed, which on both sides protrude axially over the stator body (3) with respect to the longitudinal centre axis (2), so that the same is axially flanked on both sides by annular axial protrusions (26),
- wherein the stator (1) comprises radial cooling clearances (27) that can be flowed through by coolant, which penetrate the one and/or other axial protrusion (26), and/or
- wherein the radial cooling clearances (27) penetrate the one and/or other axial protrusion (26) with respect to the longitudinal centre axis (2) radially or in the direction of a vertical axis (33) standing perpendicularly on the longitudinal centre axis (2).

14. A production method for a stator (1) according to any one of the preceding claims, **characterised by** the steps:
1) providing a stator body (3);
2) spraying or applying or coating or transfer molding or overmolding on a plastic insulating material or a corrosion resistant material onto the outer circumference lateral surface (4) of the stator body (3), so that at least a portion of the stator body (3), optional the whole stator body, is encapsulated and so that longitudinal ribs (5) forming longitudinal cooling channels (6) therebetween and/or cooling fluid guide projections (17) are realised.

15. A motor vehicle component, in particular a liquid-cooled electric drive motor, having a rotor, which interacts with a stator (1) that is optionally produced according to the production method in accordance with method Claim 14 according to any one of the substantial Claims 1 to 13 in order to provide a drive moment on the output side.
